(19) Europäisches Patentamt
European Patent Office
Office européen des brevets

(11) Veröffentlichungsnummer: **0 008 034**
**B1**

# (12) EUROPÄISCHE PATENTSCHRIFT

(45) Veröffentlichungstag der Patentschrift: **13.10.82**

(51) Int. Cl.³: **C 09 K 3/10**, C 08 J 9/12, C 08 L 83/04

(21) Anmeldenummer: **79102608.1**

(22) Anmeldetag: **24.07.79**

## (54) Verfahren zur Herstellung von gummielastische, feinporige Formschaumkörper oder Schaumüberzüge ergebenden Organopolysiloxan-Formmassen sowie daraus hergestellte Formkörper.

(30) Priorität: **03.08.78 DE 2834119**

(43) Veröffentlichungstag der Anmeldung:
**20.02.80 Patentblatt 80/4**

(45) Bekanntmachung des Hinweises auf die Patenterteilung:
**13.10.82 Patentblatt 82/41**

(84) Benannte Vertragsstaaten:
**AT BE CH DE FR GB IT NL SE**

(56) Entgegenhaltungen:
**DE - A - 2 109 522**
**FR - A - 2 312 527**
**GB - A - 1 035 940**
**GB - A - 1 413 151**
**US - A - 3 516 951**
**US - A - 3 843 586**

(73) Patentinhaber: **BAYER AG**
**Zentralbereich Patente, Marken und Lizenzen**
**D-5090 Leverkusen 1, Bayerwerk (DE)**

(72) Erfinder: **Sattlegger, Hans, Dr.**
**Auf dem Heidchen 9**
**D-5068 Odenthal (DE)**
Erfinder: **Schmidt, Hermann**
**Schoppbüchel 40**
**D-5460 Linz/Rhein (DE)**
Erfinder: **Schnurrbusch, Karl, Dr.**
**Kurt-Schumacher-Ring 154**
**D-5090 Leverkusen 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 008 034 B1

# Verfahren zur Herstellung von gummielastische, feinporige Formschaumkörper oder Schaumüberzüge ergebenden Organopolysiloxan-Formmassen sowie daraus hergestellte Formkörper

Anwendungsfertige Pasten auf der Basis von Organopolysiloxan haben ein umfangreiches Einsatzgebiet als Fugendichtstoffe gefunden. Derartige Pasten und die daraus durch Vernetzung unter Aufnahme von Luftfeuchtigkeit erhaltenen Elastomerenformkörper stellen eine ideale Dichtungssubstanz für die vielfältigsten Zwecke dar. Beschrieben werden klassische Vertreter derartiger sogenannter Einkomponentensysteme z.B. in FR—A 1 188 495, DE—B 1 247 646 oder W. Noll, Chemie und Technologie der Silicone, 1968, Verlag Chemie, Weinheim Kap. 8.1, insbesondere S. 341 und 342.

Für viele Anwendungsgebiete ergab sich jedoch immer wieder der Wunsch, derartige Fugen mit möglichst voluminösen Massen d.h. zum Beispiel mit einem Schaum zu füllen. Diese Möglichkeit boten die bisherigen Fugendichtmassen auf Basis von Polysiloxanen noch nicht. Entsprechende Systeme auf Basis anderer Kunststoffe sind zwar bekannt, doch haften diesen erhebliche andere Nachteile an.

Es sind auch bereits verschiedene Verfahren bekannt worden, um sogenannte Silicon-Schäume herzustellen (z.B. Verwendung von Organopolysiloxanen mit SiH-Gruppen, Zugabe von Treibmitteln, Füllender Polysiloxanmassen mit Mikrohohlkugeln, die sowohl organischer als auch anorganischer Natur sein können). Aber alle derartigen Schaumsysteme sind noch mit erheblichen Mängeln behaftet, sei es, daß die Komponenten erst unmittelbar vor der Anwendung gemischt werden müssen, oder daß die Leichtfüllstoffe wegen ihrer Eigenfarbe, ihrem Wassergehalt, ihrer zu hohen Dichte oder ihrem Preis keinen Vorteil bieten.

Gegenstand der vorliegenden Erfindung ist nun ein Verfahren zur Herstellung von unter Druck und unter Ausschluß von Wasser lagerfähigen, plastischen Organopolysiloxan-Formmassen die sich beim Entspannen und unter Einwirkung von Wasser oder Feuchtigkeit der Atmosphäre bereits bei Raumtemperatur in gummielastische, feinporige Formschaumkörper oder Schaumüberzüge umwandeln, hergestellt durch Mischen von $\alpha,\omega$-Dihydroxypolydiorganopolysiloxanen mit als Vernetzungsmittel dienenden Siliciumverbindungen und gegebenenfalls mit Weichmachern, mit Füllstoffen, mit bekanntermaßen die Vernetzung beschleunigenden Schwermetallsalzen und/oder Aminen, dadurch gekennzeichnet, daß das Gemisch, gegebenenfalls zusammen mit einem gegenüber den Bestandteilen des Gemisches inerten Gas, in den Innenbehälter eines Zweikammer-Behälters, der aus einem festen Außenbehälter, und einem in diesem angeordneten flexiblen Innenbehälter, versehen mit einem nach außen reichenden Abgabeventil, besteht, abgefüllt und unter Druck gesetzt wird.

Gegenstand der Erfindung sind ferner feinporige Formschaumkörper auf Basis von Polyorganosiloxanen mit einem Raumgewicht von 0,50 bis 0,95 g/ml, erhalten aus Massen, die nach dem Verfahren gemäß Anspruch 1 hergestellt wurden.

Erfindungsgemäß können somit schaumartige Elastomere aus Organopolysiloxanen hergestellt werden, welche bei Raumtemperatur durch Aufnahme von Luftfeuchtigkeit vernetzen und beispielsweise als Fugendichtstoff im Bausektor verwendet werden.

Überraschenderweise hat es sich gezeigt, daß sich das Gas, mit dem die Mischung in der Druckpackung (Zweikammer-Behälter) versetzt wird, homogen in der Paste löst bzw. verteilt. Dieses Gas, welches die Paste aus dem flexiblen Behälter durch den Ventilkopf nach außen treibt, dient gleichzeitig als Kompressionsmittel für das Pasten-Gas-Gemisch.

Sogenannte kalthärtende Einkomponentensysteme wie sie erfindungsgemäß zum Einsatz kommen, enthalten üblicherweise folgende Bestandteile:

1) Ein $\alpha,\omega$-Dihydroxypolydiorganosiloxan; dabei wird die Organogruppe normalerweise eine Methyl- oder Phenylgruppe sein. In kleineren Anteilen kann auch eine Halogenalkyl-, wie z.B. Chlormethyl-, eine Alkenyl-, wie z.B. Vinyl- oder eine Cycloalkyl-, wie z.B. eine Cyclohexylgruppe vorliegen. Die Viskosität dieser Dihydroxypolydiorganosiloxane liegt—je nach den Anforderungen der Endprodukte—zwischen etwa 500 und 2 000 000 $mm^2/s$ (20°C).

Derartige Homo-, Hetero- oder auch Copolymerisate machen im allgemeinen etwa 10 Gew.% bis 90 Gew.% der gesamten Pastenmenge aus.

2) Bei der Vernetzersubstanz handelt es sich um polyfunktionelle Organosiliciumverbindungen mit mehr als zwei funktionellen Gruppen. Diese Substanz muß in der Lage sein, die unter 1) genannten Substanzen zu "vernetzen".

Bei Herstellung der erfindungsgemäßen Einkomponenten-Kautschukmassen durch Abmischen der verschiedenen unter 1 bis 4 aufgeführten Substanzen können die unter 2) als Vernetzer dienenden Substanzen entweder während des Mischprozesses oder während des Lagerprozesses oder auch schon in einer Art Vormischung durch Abspaltung einer der reaktiven Gruppen an die Polymerenden gebunden sein.

Solche Organosiliciumverbindungen können sein:

a) nach der Formel

$$R_aSiX_{4-a}.$$

a=0 bis 2

Hierbei kann R ein Alkyl, Alkenyl, Aryl oder entsprechend halogenierter Rest sein.

X ist eine reaktive Gruppe die mit einer Silanolgruppe des Bestandteils 1) reagieren kann. Die reaktive Gruppe kann z.B. eine Alkoxy-, Acyloxy, Amino-, Cycloamino-, Säureamid oder Oximgruppe sein.

b) durch teilweise Hydrolyse entstandene Di-, Tri- und Polysiloxane der unter a) aufgeführten Silane wie das Formelbild für das Disiloxan zeigt

$$R_aX_{3-a}Si—O—SiX_{3-a}R_a$$

wie c) in DE—C 17 94 197

dargestellt.

3. Füllstoffe allgemeiner Art einzeln oder wie meistens im Gemisch verwendet z.B. verstärkende Füllstoffe (hochdisperse, durch Flammhydrolyse hergestellt Kieselsäure, Titandioxyd, Ruß usw.) oder Füllstoffe wie Quarzmehl; Kreide (natürliche und gefällte), Kunststoffpulver und Pigmente aller Art.

4. Hilfstoffe verschiedenster Art wie

a) Zusatzstoffe wirksam als Haftvermittler verschiedensten Aufbaus z.B. wie unter 2) beschrieben mit Aminoalkyl, Epoxyalkyl oder anderen reaktiven Alkylgruppen oder auch Verbindungen wie unter 2) beschrieben, bei denen a=0 ist und verschiedene X sich an einem Silicium-atom befinden.

b) Zusatzstoffe, die z.B. wirksam sind als Trockner und/oder Haftvermittler wie z.B. komplexe Titansäureester (vgl. z.B. DE—B 12 58 087).

c) Katalysatoren zur Beschleunigung der Reaktion Silanol/Vernetzer oder Vernetzer-Wasser wie Metallseifen der Metalle von Blei bis Mangan oder Aminoverbindungen.

d) Lösungsmittelzusätze wie z.B. Toluol, Petroläther.

e)Als Weichmacher bezeichnete Zusätze wie z.B. a, $\omega$-Trialkylsiloxypolydiorganosiloxan von 10 bis 1 000 000 cSt, Viskosität, Polybutene, Benzinkohlenwasserstoffe oder Phosphorsäureester.

f) Zusatzstoffe die die fungistatische Wirksamkeit der Dichtstoffe verbessern.

g) Zusätze, die die physikalischen Eigenschaften der Dichtstoffe erhöhen, wie z.B. die Heißluftbeständigkeit, Wärmeleitfähigkeit, elektrische Leitfähigkeit oder Chemikalienbeständigkeit.

h) Zusätze, die die mechanischen Eigenschaften der Dichtstoffe verändern, wie Substanzen der Klasse $R_2SiX_2$, wobei R und X wie unter 2) lauten können.

Erfindungsgemäß wird die fertige Mischung unter einem Druck von 2 bar bis etwa 30 bar, vorzugsweise von etwa 10 bar ist etwa 15 bar, in ein Zwei-Kammer-System abgefüllt.

Für den Fall, daß ein inertes Gas bei der Füllung mitverwendet wird, kommen hierfür trockene Gase wie z.B. Luft, Stickstoff, $CO_2$ oder auch Erdgas infrage. Bevorzugt werden Luft oder Stickstoff eingesetzt. Es ist jedoch in jedem Fall möglich, sowohl ohne zusätzliches Inert-gas als auch mit einem solchen zu arbeiten.

Als Zweikammer-Behälter eignen sich z.B. die an sich bekannten Druckdosen, wie sie z.B. in DE—B 2 103 447 beschrieben sind. Die Behälter bestehen im allgemeinen aus einem Aluminium-Monobloc oder auch aus mehrteiligem Weißblech. Als Bondenverschluß kann z.B. ein Kunststoffstopfen dienen. Der Innenbehälter wird aus einem flexiblen Material, z.B. Polyäthylen gefertigt. Das Austrittsventil ist ein übliches Pasten- oder Kippventil, wie es im Handel erhältlich ist.

Die Produktfüllung erfolgt vor dem Clinch-Arbeitsgang, danach wird die Druckfüllung durch die Bodenöffnung vorgenommen.

Beim Freisetzen des Gemisches aus dem unter Druck stehenden Behälter bilden sich unter Einwirkung der Feuchtigkeit (z.B. der Luft) die gewünschten gummielastischen Formmassen, die eine Dichte von etwa 0,5—0,95 g/ml aufweisen. Es war überraschend, daß unter den erfindungsgemäßen Bedingungen ohne einen besonderen Zusatz ein gleichmäßiger und ruhig aus der Verpackung austretender Schaum entsteht. Beim Ausspritzen wird das in der Paste gelöste bzw. verteilte, unter Druck stehende Gas entspannt und es bildet sich je nach Gasmenge ein mikroporöser, geschlossenzelliger Schaum, welcher nach dem Ausspritzen, ähnlich einem Hefeteig, noch etwas "aufgeht", was besonders als Anwendung für Fugenmassen auf Grund des Anpressdruckes an den Fugenflanken von Vorteil ist. Auf diese Art ist es möglich einen anwendungsfertigen Einkomponenten-Siliconschaum mit niedriger Dichte ohne die Verwendung von teuren, gefärbten oder wasserhaltigen Füllstoffen und ohne Netz— oder Treibmittel herzustellen.

Die vorliegende Erfindung soll nunmehr anhand von einigen Beispielen noch näher erläutert werden.

Beispiel 1:

250 g einer Silicon-Paste der Dichte 1,15 bestehend aus:

45,2 Gew.-Tle. $\alpha,\omega$-Dihydroxypolydimethylsiloxan, 50 000 $mm^2/s$ (20°C)
20,0 Gew.-Tle. $\alpha,\omega$-Bis-(trimethylsiloxy)-polydimethylsiloxan, 1000 $mm^2/s$ (20°C)

4,5 Gew.-Tle. Diacetessigesterdiisobyltitanat
4,5 Gew.-Tle. Feindisperse, pyrogene Kieselsäure
20,0 Gew.-Tle. Kreide
1,0 Gew.-Tle. Titandioxyd
0,07 Gew.-Tle. Ruß
0,7 Gew.-Tle. Dibutzylzinndilaurat
4,0 Gew.-Tle. Di-(N-methylbenzamido)-methyläthoxisilan

werden mit 100 ml Luft in den Innenbehälter einer Presspack-Weißblechdose von 500 ml Gesamtvolumen abgefüllt und mit einem Clinch-Kippventil verschlossen. Als Druckmedium wird zwischen Innen- und Außenbehälter Pressluft von 10 bar eingebracht.

Nach dem Ausspritzen entsteht ein Schaum-Elastomer mit einem Raumgewicht von ca. 0,79.

Beispiel 2:

220 g der o.g. Paste werden wie in Beispiel 1 beschrieben mit 130 ml Luft gemischt und mit 10 bar komprimiert. Man erhält nach dem Ausspritzen einen Schaum mit einer Dichte von ca. 0,69.

Beispiel 3:

200 g einer Silicon-Paste der Dichte 1,03 bestehend aus:

61,5 Gew.-Tle. $\alpha,\omega$-Dihydroxypolydimethylsiloxan, 50 000 $mm^2/s$ (20°C)
24,1 Gew.-Tle. $\alpha,\omega$-Bis(trimethylsiloxy)-polydimethylsiloxan, 1 000 $mm^2/s$
4,0 Gew.-Tle. Äthyltriacetoxysilan
9,5 Gew.-Tle. Feindisperse, pyrogene Kieselsäure
0,01 Gew.-Tle. Dibutylzinndiacetat

werden mit 150 ml Luft abgefüllt und unter einem Druck von 12 bar komprimiert.

Nach dem Entspannen entsteht ein Silicon-Schaum mit einem Raumgewicht von ca. 0,58.

Beispiel 4:

280 g einer Silicon-Paste der Dichte 1,21 bestehend aus:

45, Gew.-Tle. $\alpha,\omega$-Dihydroxypolydimethylsiloxan, 50 000 $mm^2/s$ (20°C)
18,0 Gew.-Tle. $\alpha,\omega$-Bis-(trimethylsiloxy)-polydimethylsiloxan, 1 000 $mm^2/s$
5,0 Gew.-Tle. Di-N-Triäthoxysilmethylen-allylamin
7,0 Gew.-Tle. Feindisperse, pyrogene Kieselsäure
21,5 Gew.-Tle. Kreide
3,0 Gew.-Tle. Titandioxyd

werden mit 115 ml Luft abgepackt und unter einem Druck von 11 bar gelagert. Man erhält nach dem Ausspritzen einen Schaum mit einem Raumgewicht von ca. 0,81.

Beispiel 5:

260 g einer Silicon-Paste der Dichte 1,25 bestehend aus:

43,4 Gew.-Tle. $\alpha,\omega$-Dihydroxypolydimethylsiloxan, 50 000 $mm^2/s$ (20°C)
15,5 Gew.-Tle. $\alpha,\omega$-Bis-(trimethylsiloxy)-polydimethylsiloxan, 1 000 $mm^2/s$
6,0 Gew.-Tle. Bis-(N-methylbenzamido) methyläthoxysilan
29,0 Gew.-Tle. Kreide
1,5 Gew.-Tle. Titandioxyd
4,5 Gew.-Tle Feindisperse, pyrogene Kieselsäure
0,02 Gew.-Tle. Dibutylzinndiacetat

werden mit 133 ml Luft abgefüllt und einem Druck von 10 bar ausgesetzt. Nach dem Ausspritzen wird ein Schaum mit einer Dichte von ca. 0,75 erhalten.

Beispiel 6

430 g einer Silicon-Paste mit einem spezifischen Gewicht von 1,25 bestehend aus:

43,3 Gew.-Tle. $\alpha$-$\omega$-Dihydroxypolydimethylsiloxan, 50000 $mm^2/s$ (20°C)
15,5 Gew.-Tle. $\alpha,\omega$-Bis-(trimethylsiloxy)-polydimethylsiloxan, 1000 $mm^2/s$ (20°C)
6,0 Gew.-Tle. Bis-(n-methylbenzamido)methylethoxysilan

29,0 Gew.-Tle. Kreide
1,5 Gew.-Tle. Titandioxyd
4,5-Gew.-Tle. Feindisperse, pyrogene Kieselsäure
0,02 Gew.-Tle. Dibutylzinndiacetat

werden mit einem Druck von 10 bar abgefüllt.

Man erhält nach dem Ausspritzen einen Siliconschaum mit einer Dichte von ca. 0,80.

**Patentansprüche**

1) Verfahren zur Herstellung von unter Druck und unter Ausschluß von Wasser lagerfähigen, plastischen Organopolysiloxan-Formmassen, die sich beim Enspannan und unter Einwirkung von Wasser oder Feuchtigkeit der Atmosphäre bereits bei Raumtemperatur in gummielastische, feinporige Formschaumkörper oder Schaumüberzüge umwandeln, hergestellt durch Mischen von $\alpha,\omega$-Dihydroxy-polydiorganosiloxanen mit als Vernetzungsmittel dienenden Siliciumverbindungen und gegebenenfalls mit Weichmachern, Füllstoffen, mit bekanntermaßen die Vernetzung beschleunigenden Schwermetallsalzen und/oder Aminen, dadurch gekennzeichnet, daß das Gemisch, gegebenenfalls zusammen mit einem gegenüber den Bestandteilen des Gemisches inerten Gas, in den Innenbehälter eines Zweikammer-Behälters, der aus einem festen Außenbehälter und einem in diesem Angeordneten flexiblen Innenbehälter, versehen mit einem nach außen reichenden Abgabeventil, besteht, abgefüllt und unter Druck gesetzt wird.

2) Feinporige Formschaumköper auf Basis von Polyorganosiloxanen mit einem Raumgewicht von 0,50 bis 0,95 g/ml erhalten aus Massen, die nach dem Verfahren gemäß Anspruch 1 hergestellt wurden.

**Claims**

1) Process for the preparation of plastic organopolysiloxane moulding compositions which can be stored under pressure and with exclusion of water, and which, on release of the pressure and under the action of water or atmospheric moisture, are converted, even at room temperature, into elastomeric, fine-pored foam mouldings or foam coatings, which compositions are prepared by mixing $\alpha,\omega$-dihydroxypolydiorganopolysiloxanes with silicon compounds which serve as crosslinking agents and, optionally, with plasticisers, with fillers and with heavy metal salts and/or amines which are known to accelerate the crosslinking, characterised in that the mixture, optionally together with a gas which is inert towards the constituents of the mixture, is filled into the inner container of a two-chamber container which consists of a rigid outer container and a flexible inner container, located within the outer container and provided with a dispensing valve which extends to the exterior, and is placed under pressure.

2) Fine-pored foam mouldings based on polyorganosiloxanes and having a density of 0.50 to 0.95 g/ml obtained from compositions which have been prepared by the process according to Claim 1.

**Revendications**

1. Procédé de production de matières à mouler plastiques en organopolysiloxannes, pouvant être stockées sous pression et à l'abri de l'eau, qui se transforment lors de la détente et sous l'action de l'eau ou de l'humidité de l'atmosphère, déjà à la température ambiante, en pièces moulées ou revêtements en mousse finement poreuse, ayant l'élasticité du caoutchouc, produits par mélange d'$\alpha,\omega$-dihydroxypolydiorganosiloxannes avec des composés de silicium servant d'agents de réticulation et, le cas échéant, avec des plastifiants, des charges, des sels de métaux lourds accélérant de façon connue la réticulation et/ou des amines, caractérisé en ce que le mélange est chargé le cas échéant conjointement avec un gaz inerte vis-à-vis des composants du mélange dans le récipient intérieur d'un récipient à deux chambres qui est formé d'un récipient extérieur rigide et d'un récipient intérieur flexible disposé dans celui-ci et muni d'une soupape d'évacuation de gas s'étendant jusqu'à l'extérieur, et est mis sous pression.

2. Pièces moulées en mousse finement poreuse à base de polyorganosiloxannes ayant un poids volumique de 0,50 à 0,95 g/ ml, obtenues à partir de matières qui ont été produites par le procédé suivant la revendication 1.